# EUROPÄISCHE PATENTANMELDUNG

(11) **EP 4 751 903 A1**
(43) Veröffentlichungstag der Anmeldung: **03.06.2026**
(21) Anmeldenummer: 25219660.5
(22) Anmeldetag: 01.12.2025
(51) Int. Cl.: B32B 1/08, B32B 5/02, F16L 55/165, B32B 5/26, D04H 1/492, D04H 3/11

(54) **VERBUNDMATERIAL FÜR SCHLAUCHLINER**

(30) Priorität: 02.12.2024 DE 102024135676
(71) Anmelder: Tenowo GmbH, 95028 Hof (DE)
(72) Erfinder: BAUER, Mirko, 09116 Chemnitz (DE); FISCHER, Gelena, 09669 Frankenberg/Sa. (DE)
(74) Vertreter: Meissner Bolte Partnerschaft mbB

(57) **Zusammenfassung**

Die Erfindung betrifft ein Verbundmaterial für Schlauchliner zur grabenlosen Rohr- oder Kanalsanierung, umfassend mindestens eine Lage aus einem Faservlies. Erfindungsgemäß besteht die mindestens eine Lage aus einem längsgelegten, wasserstrahlverfestigten Vliesstoff aus Stapelfasern.

## Beschreibung

Die Erfindung betrifft ein Verbundmaterial für Schlauchliner zur grabenlosen Rohr- oder Kanalsanierung, umfassend mindestens eine Lage aus einem Faservlies sowie eine Verwendung eines längsgelegten wasserstrahlverfestigten Vliesstoffes aus Stapelfasern.

Aus der DE 3 906 057 A1 ist ein Verfahren zum Auskleiden eines im Erdreich verlegten Leitungsrohres unter Verwendung eines wenigstens eine Schicht aus einem Faservlies aufweisenden Auskleidungsschlauches, dessen Faservliesschicht mit einem aushärtbaren Kunstharz getränkt wird, vorbekannt.

Der Auskleidungsschlauch wird in das Leitungsrohr eingeführt, mit einem Druckmedium an die Innenfläche des zu sanierenden Leitungsrohres angepresst und anschließend das Kunstharz ausgehärtet.

Der DE 3 906 057 A1 liegt die Aufgabe zugrunde, ein verbessertes Verfahren zum Sanieren einer in einem Erdreich verlegten Rohrleitung so auszubilden, dass mit einer relativ geringen Menge an gut haftendem, spannungsfrei aushärtendem Kunstharz eine intensive Haftverbindung zwischen dem Auskleideschlauch und der zu sanierenden Rohrleitung erreichbar ist.

Diesbezüglich soll der Auskleideschlauch aus einer Außenschicht und einer Innenschicht aus jeweils einem Faservlies und aus einer zwischen den genannten Schichten angeordneten, flüssigkeitsundurchlässigen, dünnen Sperrschicht gebildet werden.

Durch die Wahl der Dicke der Außenschicht kann die Menge des an der Innenfläche des Altrohres gut anhaftenden und spannungsfrei aushärtenden Kunstharzbedeckung beeinflusst werden.

Die aus Faservlies bestehende Innenschicht des Auskleideschlauches kann mit einem Polyesterharz getränkt werden, dem ein chemisches Mittel zugesetzt wird, durch das die Schrumpfung beim Aushärten des Polyesterharzes herabgesetzt wird.

Konkret soll das Faservlies ein Polyester- oder Glasfaservlies oder eine Kombination aus Polyesterfasern oder Glasfasern enthalten bzw. derartig ausgebildet sein.

Bekannt ist weiterhin die Verwendung eines Verbundmaterials zur grabenlosen Rohr- oder Kanalsanierung, umfassend einen Kunit- oder Multiknit-Vliesstoff in Verbindung mit einem Gestrick. Problematisch ist hier jedoch die Struktur und die unebene Oberfläche des Vliesstoffes, der sich nur schlecht beschichten lässt und die fehlende Formstabilität des Gestricks.

Ein Verbund aus Nadelvlies und Gestrick mit anschließender Beschichtung ist beispielsweise aus der DE 69115472 T2 vorbekannt.

Aus dem Vorgenannten ist es Aufgabe der Erfindung, ein weiterentwickeltes Verbundmaterial für Schlauchliner zur grabenlosen Rohr- oder Kanalsanierung anzugeben, welches kostengünstig ist, ein hervorragendes Dehnungsverhalten und eine optimale Oberfläche aufweist, welche sehr gut für nachfolgende Beschichtungsschritte geeignet ist.

Die Lösung der Aufgabe der Erfindung erfolgt durch ein Verbundmaterial gemäß Definition nach Patentanspruch 1 sowie der Verwendung eines längsgelegten, wasserstrahlverfestigten Vliesstoffes aus Stapelfasern gemäß Anspruch 13, wobei die Unteransprüche mindestens zweckmäßige Ausgestaltungen und Weiterbildungen umfassen.

Es wird demnach von einem Verbundmaterial für Schlauchliner bzw. Schlauchinliner zur grabenlosen Rohr- oder Kanalsanierung ausgegangen, umfassend mindestens eine Lage aus einem Faservlies.

Die mindestens eine Lage besteht aus einem längsgelegten, wasserstrahlverfestigten Vliesstoff aus Stapelfasern.

Der wasserstrahlverfestigte Vliesstoff weist bevorzugt Fasern aus organischen Polymeren, insbesondere Polyesterfasern auf bzw. enthält diese Fasern.

In einer ersten Ausführungsform enthält der wasserstrahlverfestigte Vliesstoff kräuselbare Fasern, ausgebildet als Zweikomponenten-Fasern, wobei die beiden Komponenten ein unterschiedliches Wärmeschrumpfverhalten aufweisen.

Der Anteil der kräuselbaren Fasern liegt bevorzugt im Bereich von ≥ 50 % bezogen auf die Gesamtfasermischung.

Die Faserfeinheit der eingesetzten Fasern liegt bevorzugt im Bereich zwischen 1 bis 4 dtex.

Das Verbundmaterial kann zusätzlich mindestens eine Lage aus Kunit- und/oder Multiknit-Vliesstoff und/oder mindestens eine Lage aus Glasfasern oder eine Glasfasermatte umfassen.

Zur Bildung des Verbundes sind die einzelnen Lagen oder Schichten bevorzugt vernadelt.

Die Lage aus längsgelegtem, wasserstrahlverfestigten Vliesstoff kann ein Bindemittel zum Fixieren der Faserpositionen enthalten.

Das Bindemittel kann wiederum als wässrige Polymerdispersion und/oder als ein Bindefaseranteil ausgebildet sein.

Durch die Wahl der Einstichdichte und der Einstichtiefe beim Vernadeln wird eine Trennkraft der einzelnen Lagen im Bereich von größer 10 N/5 cm erreicht.

Bei der Anwendung von Lagen aus Kunit-Vliesstoff bzw. Multiknit-Vliesstoff wird der wasserstrahlverfestigte Vliesstoff bevorzugt auf die Maschenseite des Kunit-Vliesstoffes oder auf die erste Maschenseite des Multiknit-Vliesstoffes aufgebracht.

Der wasserstrahlverfestigte Vliesstoff der ersten Ausführungsform besitzt bei Kombination mit Kunit/Multiknit ein Flächengewicht im Bereich von 30 bis 150 g/m² und eine Dehnung in Längsrichtung im Bereich von 50 bis 100 % sowie eine Dehnung in Querrichtung von mindestens 100 %.

Erfindungsgemäß ist weiterhin die Verwendung eines längsgelegten wasserstrahlverfestigten Vliesstoffes aus Stapelfasern als mindestens eine Lage eines Schlauchliners oder Schlauchinliners für die Sanierung von Rohren oder Kanälen.

Der besondere Vorteil des geschilderten längsgelegten Vliesstoffes besteht in seiner intrinsisch gegebenen hohen Dehnbarkeit in Querrichtung bei vorgebbarer Dehnbarkeit und gleichzeitig hoher Festigkeit in Längsrichtung.

Beispielsweise in Verbindung mit einer Glasfasermatte für große Rohrdurchmesser kann ein derartiger erfindungsgemäßer Vliesstoff als äußere Lage in Richtung Beschichtung bzw. Folie eines Schlauchliners eingesetzt werden. Bei dieser Anwendung kommt es auf eine hohe Festigkeit bei niedriger Dehnung im Bereich kleiner 50% in Längsrichtung an. Kräuselfasern kommen nicht zum Einsatz.

Dabei dient dieser Vliesstoff gleichzeitig als Verstärkung in Längsrichtung, so dass zusätzliche Verstärkungslagen reduziert oder weggelassen werden können.

Bei kleineren Rohrdurchmessern erfolgt die Kombination mit Kunit/Multiknit. Hier ist eine mittlere Dehnung von größer 50% in Längsrichtung und die Verwendung von Kräuselfasern erforderlich.

Grundsätzlich liegt eine vorteilhafte hohe Dehnbarkeit in Querrichtung und eine Anpassbarkeit der Dehnung in Längsrichtung vor ohne dass die Dehnbarkeit in Querrichtung verschlechtert wird.

Wie erwähnt, besteht der wasserstrahlverfestigte Vliesstoff aus organischen Polymeren, beispielsweise Polyester, PP oder PA, bevorzugt aus Polyester-Standardfasern.

Der Wasserstrahlvliesstoff gemäß der Erfindung kann auch bei kleineren Rohrdurchmessern, insbesondere an Biegungen oder Übergängen vorteilhaft eingesetzt werden. Diesbezüglich enthält der Vliesstoff bzw. die Vliesstoffmischung einen Anteil an kräuselbaren Fasern.

Diese kräuselbaren Fasern liegen als Zweikomponenten-Fasern vor, bei der zwei Materialien mit unterschiedlichen Wärmeschrumpfverhalten im Querschnitt nebeneinander befindlich sind.

Wird ein Vliesstoff mit derartigen Fasern einer Wärmebehandlung unterzogen, führt der unterschiedliche Schrumpf zu einer starken Kräuselung der Fasern und zu einem Flächenschrumpf des Vliesstoffes.

Damit ergibt die Kräuselung eine verbesserte Dehnbarkeit in Längsrichtung, ohne die Dehnbarkeit in Querrichtung negativ zu beeinflussen.

Gleichzeitig wird das Flächengewicht des Vliesstoffes erhöht.

Die hierfür eingesetzte Temperatur bei dem Schritt des Kräuselns liegt im Bereich von ≥ 180°C.

Um den gewünschten Effekt für die erfindungsgemäße Verwendung zu erzielen, beträgt der kräuselbare Faseranteil ≥ 50 % bezogen auf die Fasermischung.

Bezüglich des Verfahrens zur Herstellung eines dehnbaren, elastischen Vliesstoffes durch Kräuselung sei auf die Lehre der DE 10 2008 024 945 B1 verwiesen, die vollinhaltlich zum Gegenstand der vorliegenden Anmeldung erklärt wird.

Optional besteht die Möglichkeit, dem wasserstrahlverfestigten Vliesstoff ein Bindemittel zuzugeben, um die Fasern in ihrer Position zu fixieren. Das Bindemittel kann in Form einer wässrigen Polymerdispersion oder aber auch durch einen Anteil von Bindefasern eingebracht werden.

Das erfindungsgemäße Verbundmaterial weist ein hervorragendes Dehnungsverhalten auf. Gleichzeitig ist die Oberfläche des wasserstrahlverfestigten Vlieses sehr gleichmäßig, so dass sich optimale Bedingungen für nachfolgende Beschichtungen ergeben.

Es besteht darüber hinaus die Möglichkeit, einen Verbund aus mehreren Lagen von wasserstrahlverfestigten Vlies oder aus Wasserstrahlvlies mit einer oder mehreren Lagen Kunit- oder Multiknit-Vliesstoff einzusetzen.

Die Kombination mit einer oder mehreren Lagen Kunit-Vliesstoff oder Multiknit-Vliesstoff führt zu hervorragenden Eigenschaften aufgrund der sich dann ergebenden großen Dicke, einem hohen Volumen und einer sehr guten Harzaufnahmefähigkeit für die spätere Verwendung als Schlauchliner.

Aufgrund der gleichmäßigen und sehr glatten Oberfläche des Wasserstrahlvlieses dringen Beschichtungsmaterialien weniger tief ein, was für diese Lage des Verbundmaterials von Vorteil ist.

In einer bevorzugten Ausführungsform werden die einzelnen Verbundlagen durch Vernadeln untereinander fixiert.

Die Einstichdichte und die Einstichtiefe beim Vernadeln werden so eingestellt, dass die Trennkraft der einzelnen Schichten ≥ 10 N/5 cm beträgt. Hierdurch ist der Verbund für die nachfolgende Vereinbarung sehr stabil und trennt sich nicht.

In einer Alternative können die einzelnen Lagen auch miteinander bzw. untereinander verklebt werden.

Je nach benötigtem Gewicht bzw. notwendiger Dicke und im Hinblick auf den betreffenden Anwendungsfall können auch mehrere Lagen Multiknit- bzw. Kunit-Vlies zur Anwendung kommen, wobei der Materialaufbau, wie Flächengewicht aber auch die Schichtdicken jeweils gleich oder unterschiedlich sein können.

Besonders bevorzugt wird das Wasserstrahlvlies auf der Maschenseite des Kunit-Vlieses bzw. auf die erste Maschenseite des Multiknit-Vlieses genadelt.

Die Erfindung soll nachstehend anhand eines Ausführungsbeispieles sowie einer Gegenüberstellung der erfindungsgemäßen Beispiele mit einem Referenzverbundmaterial auf Gestrickbasis erläutert werden.

Das eingesetzte Wasserstrahlvlies gemäß Ausführungsbeispiel weist ein Flächengewicht im Bereich von 30 bis 150 g/m² bei einer Faserfeinheit von 1 bis 4 dtex auf.

Die Dehnung in Querrichtung beträgt mindestens 100 %. Die Dehnung in Längsrichtung liegt in einem Bereich zwischen 50 bis 100 %. Bei dem Einsatz von Kräuselfasern werden bis zu 100 %, beim Einsatz von Standardfasern Dehnungsweiten in Längsrichtung von < 50 % erreicht. Der Vorteil des erfindungsgemäßen Materials liegt in einer grundsätzlich hohen Dehnbarkeit in Querrichtung und einer vorgebbaren und an den Anwendungsfall anpassbaren Dehnung in Längsrichtung ohne dabei die gewünschte hohe Dehnbarkeit in Querrichtung zu verschlechtern.

Die Fasern für das Vlies bestehen aus organischen Polymer, bevorzugt Polyester.

Die kräuselbaren Fasern sind Zweikomponentenfasern, bevorzugt ebenfalls aus Polyester, wobei zwei Polyestermaterialien mit einem unterschiedlich starken Schrumpfverhalten bei erhöhter Temperatur im Faserquerschnitt nebeneinander angeordnet sind.

Die Vliesstoffherstellung aus Stapelfasern erfolgt mittels Krempelverfahren, bei dem die Fasern längs in Maschinenrichtung orientiert werden. Die Verfestigung erfolgt mittels Wasserstrahlen.

Das Schrumpfen des Materials erfolgt in einem Spannrahmen bei entsprechend hoher Temperatur im Bereich von > 180°, so dass die Fasern schrumpfen und sich die gewünschte Kräuselung ergibt.

### Beispiel 1:

Es liegt eine Fasermischung aus Stapelfasern mit 60 % Standard-Polyester mit Feinheit 1,3 dtex und 40 % Standard-Polyester mit Feinheit 1,7 dtex vor. Diese Mischung wird mittels Krempel zu einem längsgelegten Faserflor verarbeitet, mittels Wasserstrahlen verfestigt und getrocknet. Das Flächengewicht wird auf 45 g/m² eingestellt. Dieses Material hat dann eine sehr hohe Höchstzugkraft und eine geringe Höchstzukraftdehnung in Längsrichtung und ist als Verbundlage und Längsverstärkung in Verbindung mit Glasfasermatten besonders geeignet.

### Beispiel 2:

Es wird ausgegangen von einer Fasermischung aus Stapelfasern mit 80 % Kräuselfaser mit Feinheit 2,2 dtex und 20 % Standard-Polyester mit Feinheit 1,7 dtex. Die Mischung wird mittels Krempel zu einem längsgelegten Faserflor verarbeitet, mittels Wasserstrahlen verfestigt und getrocknet. Anschließend erfolgt eine Temperaturbehandlung im Spannrahmen bei 200°C. Dabei ergibt sich ein Schrumpfen in Längsrichtung auf 60 % der Ausgangslänge und eine Erhöhung des Flächengewichtes von 36 g/m² auf 66 g/m².

Die Höchstzugkraftdehnung in Längsrichtung erhöht sich dabei deutlich von 16 % auf 77 %, in Querrichtung erfolgt eine leichte Verringerung von 161 % auf 141 %.

### Beispiel 3:

Das Verfahren erfolgt analog wie zum Beispiel 2 geschildert. Nach Verfestigung wird mittels Quetschfoulard eine wässrige Bindemittel-Dispersion aus Polyacrylat-Copolymeren aufgebracht und bei 140°C getrocknet. Anschließend erfolgt eine Temperaturbehandlung wie im Beispiel 2, wobei sich das Flächengewicht von 36 g/m² auf 59 g/m² und die Höchstzugkraftdehnung in Längsrichtung von 16 % auf 75 % erhöht. In Querrichtung bleibt die Dehnung praktisch unverändert.

### Beispiel 4:

Der Wasserstrahlvliesstoff gemäß Beispiel 2 wird mit zwei Lagen Kunit-Vliesstoff vernadelt. Als Kunit wird das Produkt SVKU13 der Firma TENOWO (eingetragene Marke) mit einem Flächengewicht von 320 g/m² verwendet, welches bereits im Bereich der Rohrsanierung erfolgreich eingesetzt wurde.

Dabei ist bei den beiden Kunit-Lagen jeweils die vermaschte Seite oben und die nicht vermaschte Seite unten. Das Wasserstrahlvlies liegt auf der vermaschten Seite des oberen Kunit. Bei einer Einstichdichte von 116 E/cm² beträgt die Verbundhaftung 20,1 N/5 cm (als niedrigster Wert zwischen jeweils zwei Lagen).

Die Flächengewichtsbestimmung erfolgt gemäß ISO 9073-1, die Bestimmung der Dicke gemäß ISO 9073-2 mit 0,5 kPa Prüfdruck und 25 cm² Prüffläche. Die Bestimmung der Höchstzugkraft bzw. Höchstzugkraftdehnung erfolgt gemäß ISO 9073-3, Option B; aber abweichend bei einer Prüfgeschwindigkeit von 200 mm/Min bei einer Einspannlänge von 100 mm.

Die Verbundhaftung wird nach DIN 55543-5 mit abweichender Probenbreite von 50 mm untersucht.

Die nachstehende Tabelle zeigt einen Vergleich der Beispiele 1 bis 4 mit einem Referenzbeispiel (Gestrick) gemäß EP 0 875 713 B1 (dort Beispiel 2).

| **Parameter** | **Einheit** | **Beispiel 1** | **Beispiel 2** | **Beispiel 3** | **Beispiel 4** | **Referenz *** |
|---|---|---|---|---|---|---|
| **Flächengewicht** | [g/m²] | 46 | 66 | 59 | 712 | 770 |
| **Dicke** | [mm] | 0,6 | 0,6 | 0,6 | 6,3 | 3,5 |
| **Höchstzugkraft längs** | [N/5cm] | 171 | 139 | 149 | 790 | 550 |
| **Höchstzugkraft quer** | [N/5cm] | 24 | 38 | 31 | 396 | 400 |
| **Höchstzugkraftdehnung längs** | [%] | 25 | 77 | 75 | 76 | 25 |
| **Höchstzugkraftdehnung quer** | [%] | 172 | 141 | 168 | 231 | 82 |

Es ist erkennbar, dass die Beispiele 2 bis 4 in beiden Richtungen eine bessere Dehnbarkeit aufweisen als die Gestrick-Referenz. Dies gilt insbesondere für Beispiel 4, welches bei ähnlichem Gewicht außerdem eine deutlich höhere Dicke besitzt.

Somit ist gemäß dem erfindungsgemäßen Material eine wesentlich bessere Anpassung an Dimensionssprünge und Krümmungen in Rohrsystemen möglich.

## Patentansprüche

1. Verbundmaterial für Schlauchliner zur grabenlosen Rohr- oder Kanalsanierung, umfassend mindestens eine Lage aus einem Faservlies, **dadurch gekennzeichnet, dass**
die mindestens eine Lage aus einem längsgelegten, wasserstrahlverfestigten Vliesstoff aus Stapelfasern besteht.

2. Verbundmaterial nach Anspruch 1,
**dadurch gekennzeichnet, dass**
der wasserstrahlverfestigte Vliesstoff Fasern aus organischen Polymeren, insbesondere Polyesterfasern enthält.

3. Verbundmaterial nach Anspruch 1 oder 2,
**dadurch gekennzeichnet, dass**
der wasserstrahlverfestigte Vliesstoff kräuselbare Fasern, ausgebildet als Zweikomponenten-Fasern deren Komponenten ein unterschiedliches Wärmeschrumpfverhalten besitzen, enthält.

4. Verbundmaterial nach Anspruch 3,
**dadurch gekennzeichnet, dass**
der Anteil der kräuselbaren Fasern im Bereich von ≥ 50 % der Gesamtfasermischung liegt.

5. Verbundmaterial nach einem der Ansprüche 1 bis 4
**dadurch gekennzeichnet, dass**
die Faserfeinheit im Bereich zwischen 1 bis 4 dtex liegt.

6. Verbundmaterial nach einem der vorangegangenen Ansprüche,
**dadurch gekennzeichnet, dass** weiterhin mindestens eine Lage Kunit- und/oder Multiknit-Vliesstoff und/oder eine Lage aus Glasfasern oder eine Glasfasermattenschicht vorgesehen ist.

7. Verbundmaterial nach Anspruch 6,
**dadurch gekennzeichnet, dass**
die Lagen zur Verbundbildung vernadelt sind.

8. Verbundmaterial nach einem der vorangegangenen Ansprüche,
**dadurch gekennzeichnet, dass**
die Lage aus längsgelegtem wasserstrahlverfestigten Vliesstoff ein Bindemittel zum Fixieren der Faserpositionen enthält.

9. Verbundmaterial nach Anspruch 8,
**dadurch gekennzeichnet, dass**
das Bindemittel als wässrige Polymerdispersion und/oder Bindefasern ausgebildet ist.

10. Verbundmaterial nach Anspruch 7,
**dadurch gekennzeichnet, dass**
die Trennkraft der einzelnen Lagen im Bereich von ≥ 10 N/5 cm liegt.

11. Verbundmaterial nach Anspruch 6, 7 oder 10,
**dadurch gekennzeichnet, dass**
der wasserstrahlverfestigte Vliesstoff auf die Maschenseite des Kunit-Vliesstoffes oder auf die erste Maschenseite des Multiknit-Vliesstoffes aufgebracht ist.

12. Verbundmaterial nach einem der vorangegangenen Ansprüche,
**dadurch gekennzeichnet, dass**
der wasserstrahlverfestigte Vliesstoff ein Flächengewicht im Bereich von 30 bis 150 g/m², eine Höchstzugkraftdehnung in Längsrichtung im Bereich von 50 bis 100 % und eine Höchstzugkraftdehnung in Querrichtung von mindestens 100 % aufweist.

13. Verwendung eines längsgelegten, wasserstrahlverfestigten Vliesstoffes aus Stapelfasern nach mindestens einem der vorangegangenen Ansprüche als mindestens eine Lage eines Schlauchliners oder Schlauchinliners für die Sanierung von Rohren oder Kanälen.
